# EUROPEAN PATENT APPLICATION

(11) **EP 0 622 054 A2**
(43) Date of publication of application: **02.11.1994**
(21) Application number: 94830183.3
(22) Date of filing: 19.04.1994
(51) Int. Cl.: A61C 17/02, B25G 1/10

(54) **A dental syringe**

(30) Priority: 30.04.1993 IT BO930181
(71) Applicant: CASTELLINI S.p.A., I-40013 Castelmaggiore (Bologna) (IT)
(72) Inventor: Castellini, Franco, I-40123 Bologna (IT)
(74) Representative: Lanzoni, Luciano

(57) **Abstract**

The dental syringe comprises a tubular body (2) housing a selection and supply unit (3) of water and air to a spout (4), and a rigid tubular element (7) detachably constrainable coaxially and externally to the selection and supply unit (3) and provided with an aperture (11) to connect the controls (5) of the selection and supply unit (3) to the selection and supply unit (3). The rigid tubular element (7) fits inside a tubular glove (8), made in an elastic material and in a single body with the controls (5) such as to create an easily-sterilizable continuous external surface.

## Description

The invention relates to a dental syringe, of the type used by dentists to clean or dry a zone of the oral cavity he or she intends to operate in, where a fluid for cleaning or drying comprises water or air or a nebulized mixture of the two.

The syringe is usually composed of a handpiece with a tubular body housing a unit or group constituting the mechanical, hydraulic or electrical component for supplying the water or air. At a front end of the tubular body is a spout delivering the fluid, which is connected to the supply unit and which is detachable for sterilizing or substitution purposes, while a traditional socket connection is situated at a posterior end, for connecting up to pressurised water and air supply pipes.

The tubular body exhibits at least two apertures on the handpiece for command controls or levers.

The controls, either directly or through connected lever mechanisms in the supply unit comprising intercept valves, enable a selection of the delivery fluid or fluid mix to be made and regulated. This handpiece arrangement, however, has in recent times become unsuitable to ever-stricter hygiene norms in the field, especially with regard to their sterilization, which is at present done in sterilization chambers.

The chief drawback lies in the fact that the handpiece exhibits numerous interstitial spaces and apertures, with the result that the handpiece is not completely closed and in order to achieve a full sterilization it would strictly also be necessary to sterilize the supply unit. The result is a build-up of bacteria in the above-mentioned spaces and apertures and a gradual increase in malfunctions of the unit due to continual sterilization procedures, which are not well-suited to the delicate structural components inside the unit.

A solution to the above problem has been to cover the internal supply unit with a rigid and sealed external tubular body, with the controls being activated from outside the external body, said external body affording an aperture at a position coinciding with said controls. The controls are covered by a strip of shaped elastic material perfectly meeting edges of the rigid body aperture, and are activated by user pressure on the elastic strips.

The above solution, however, still exhibits drawbacks with regard to hygiene, since interstitial spaces, now between the elastic material and the rigid body, are not totally eliminated, and can become clogged with infectious bacteria liable to pass through to the supply unit. Since only the rigid external body is sterilized, the elastic strip remains a hygiene hazard.

The present invention aims to obviate the above drawbacks by providing a compact dental syringe having a linear external design such that it does not offer points at which bacteria can easily accumulate, and which can be sterilized efficiently at those surface points, such as where the controls of the unit are situated, which are most susceptible to build-ups of bacteria.

Further characteristics and advantages of the present invention will better emerge from the detailed description that follows, of a preferred but non-exclusive embodiment here illustrated in the form of a non-limiting example in the accompanying drawings, in which:
- figure 1 is a lateral view of the dental syringe of the invention, with some parts removed better to evidence others;
- figure 2 is a section along line II-II of the syringe of figure 1;
- figure 3 is an exploded perspective view of the handpiece of the invention with a spout attached, also part of the invention.

With reference to the figures, the dental syringe comprises a plurality of elements, configured to form a single handpiece for cleaning or drying the oral cavity.

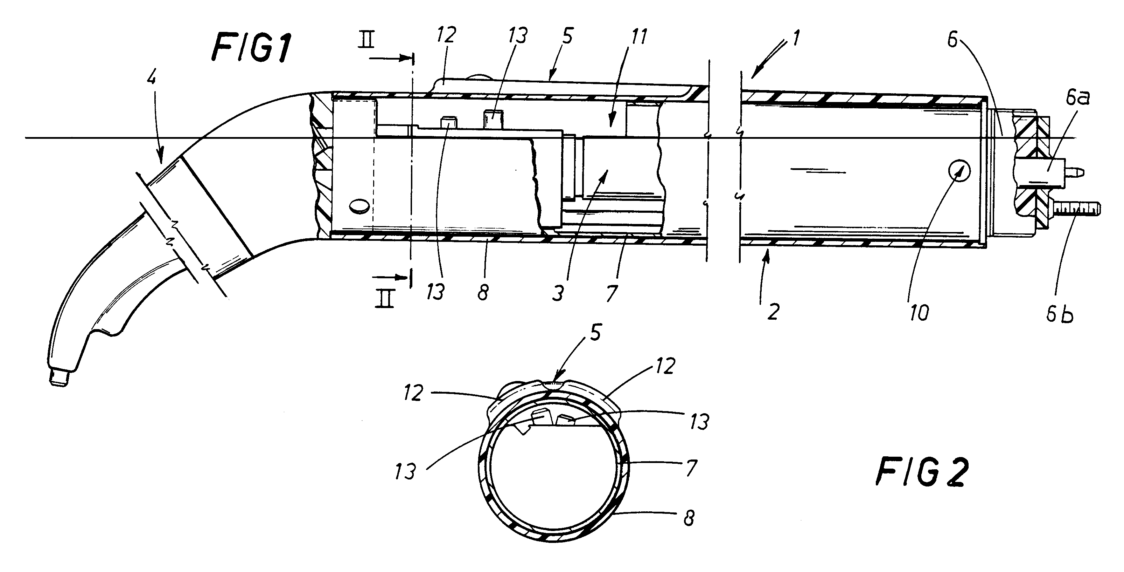

In figure 1 the elements are defined as: a central grip 1 constituted by a tubular body 2 housing a selection and supply unit 3 of water and air. A spout 4 is connected to a front end of the tubular body 2, and a detachable socket 6, for supplying fluids to the handpiece, is connected to a back end of the tubular body 2.

The selection and supply unit 3, of known type and not illustrated in detail, supplies the fluids to the spout 4 through relative pipes passing through the tubular body 2. The spout 4 is rigidly attached to the tubular body 2 and detachable from the selection and supply unit 3. Pressurized water and air is supplied to the selection and supply unit 3 through pipes 6a and 6b passing through the socket 6 .

The tubular body 2 is also provided with controls 5 (better described hereinbelow) acting directly on the selection and supply unit 3 to command and control the supply of water and/or air.

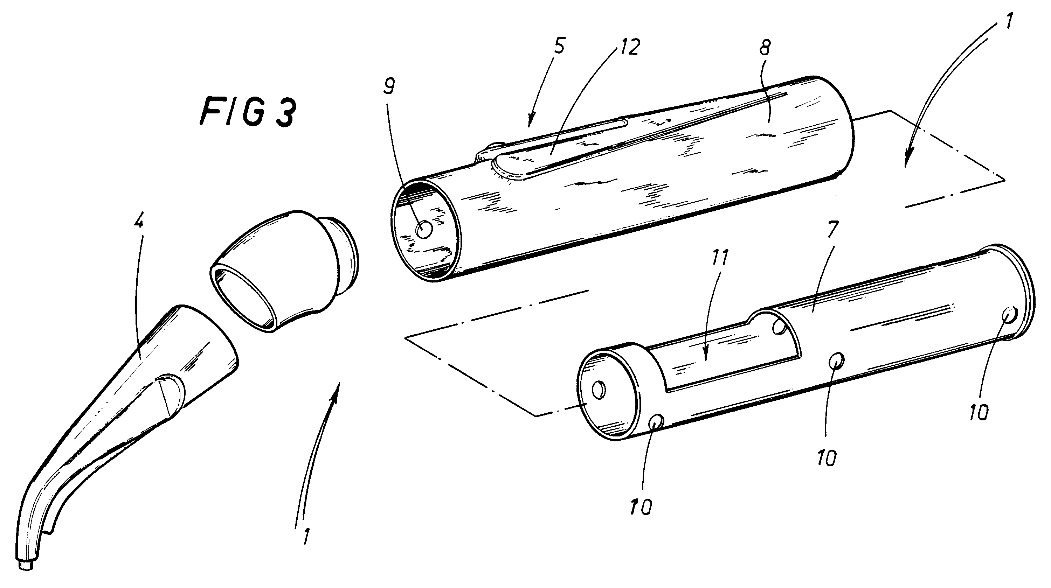

In the embodiment illustrated in the figures, and especially in figure 3, the tubular body 2 comprises a rigid tubular element 7 which fits inside a rubber tubular glove 8. The preferably metal rigid tubular element 7 is externally and coaxially constrainable to the selection and supply unit 3, is detachable therefrom, and is provided with an aperture 11 for the controls 5 and an operative zone of the selection and supply unit 3 to be connected to each other.

The rigid tubular element 7 supports the tubular glove 8, which is made in a single body together with the controls 5, in an elastic material such as silicone. Thus the external surface is continuous.

On its internal surface the tubular glove 8 exhibits a series of radial projections which can be coupled in corresponding holes 10 on the external surface of the rigid tubular element 7. The resulting coupling blocks the rigid tubular element 7 in the tubular glove 8 both axially and in rotation about its longitudinal axis.

Figure 3 shows how the controls 5 arranged on the tubular glove 8 are constituted by two raised zones 12, forming a Y-shape between themselves, exhibited on the external surface of the tubular glove 8. Each raised zone 12 is situated above an air or water control button 13 on the selection and supply unit 3 (see figure 2). Thus by pressing one or both raised zones 12 the dentist can select and/or mix the fluids as required. The handpiece offers technical characteristics that render it very easy to sterilize the tubular body 2, as well as the spout 4 by sliding out the socket 6 and the selection and supply unit 3 through the back end of the handpiece. Only the tubular glove 8, the rigid tubular element 7 an the attached spout 4 are placed in the sterilization chamber.

The grip of the handpiece thus constructed renders the handpiece not only easy to hold and use, but also very safe thanks to the presence of the external glove 8 which obviates the need to sterilize the selection and supply unit 3, the glove 8 being free of interstitial gaps and apertures which can give rise to build-ups of bacteria.

## Claims

1. A dental syringe comprising a central handgrip (1) constituted by:
- a tubular body (2) housing a selection and supply unit (3) of water and air;
- a spout (4) detachably connected to the selection and supply unit (3) at a front end of the tubular body (2), which receives water and air from the supply unit (3);
- controls (5) provided on said body (2) for activating a supply of water and air to the supply unit (3);
a socket (6) connected to the selection and supply unit (3), said socket (6) being equipped with supply pipes (6, 6b) of the water and air to the selection and supply unit (3),
characterised in that the tubular body (2) comprises a rigid tubular element (7) externally and detachably constrainable to the selection and supply unit (3) and equipped with at least one aperture (11) connecting the controls (5) and the selection and supply unit (3), said rigid tubular element (7) supporting an external tubular glove (8) made of an elastic material and in a single body with the controls (5) such as to define a continuous external surface of the handpiece.

2. A syringe as in claim 1, characterised in that the tubular glove (8) exhibits a series of radial projections (9) on an internal surface of the glove (8), which projections (9) are couplable to holes (10) provided in the rigid tubular element (7) on an external surface of said rigid tubular element (7), such as to permit of axially and rotationally constraining the rigid tubular element (7) inside the tubular glove (8).

3. A syringe as in claim 1, characterised in that the controls (5) are constituted by a pair of raised zones (12) exhibited on an external surface of the tubular glove (8), and forming a Y-shape.
